Europäisches Patentamt

(19) European Patent Office

Office européen des brevets

(11) Numéro de publication: **0 227 502**
**B1**

(12) **FASCICULE DE BREVET EUROPEEN**

(45) Date de publication du fascicule du brevet: **26.09.90**

(21) Numéro de dépôt: **86402362.7**

(22) Date de dépôt: **22.10.86**

(51) Int. Cl.⁵: **G 02 B 5/10,** G 02 B 7/18

(54) **Miroir allégé et procédé pour le fabriquer.**

(30) Priorité: **23.10.85 FR 8515747**

(43) Date de publication de la demande:
**01.07.87 Bulletin 87/27**

(45) Mention de la délivrance du brevet:
**26.09.90 Bulletin 90/39**

(84) Etats contractants désignés:
**BE DE FR GB NL**

(56) Documents cités:
**FR-A-1 473 408**
**GB-A-2 138 166**
**US-A-3 753 322**

**SOVIET INVENTIONS ILLUSTRATED, semaine
K30, 7 septembre 1983, résumé no. L01 P81,
Derwent Publications Ltd; & SU-A-960 706 (I.K.
MESHKOVSKII) 23-09-1982**

**SOVIET INVENTIONS ILLUSTRATED, semaine
041, 9 mars 1983, résumé no. B3045 K/04,
Derwent Publications Ltd; & SU-A-915 054 (V.D.
DEREVENSKII) 23-03-1982**

(73) Titulaire: **R.E.O.S.C. (RECHERCHES ET ETUDES
D'OPTIQUE ET DE SCIENCES CONNEXES)**
**10, rue des Ecoles**
**Ballainvilliers F-91160 Longjumeau (FR)**

(72) Inventeur: **Paseri, Jacques**
**10, rue du Bon Noyer Fontenay les Briis**
**F-91640 Briis Sous Forges (FR)**

(74) Mandataire: **Schrimpf, Robert et al**
**Cabinet Regimbeau 26, Avenue Kléber**
**F-75116 Paris (FR)**

Courier Press, Leamington Spa, England.

EP 0 227 502 B1

# Description

L'invention concerne les miroirs à face réfléchissante non plane (notamment concave ou convexe) et elle s'applique en particulier aux miroirs d'un diamètre supérieur à 0,50 m, de préférence aux miroirs d'un diamètre de 2 à 3 m ou d'un diamètre supérieur, en particulier aux grands miroirs sphériques ou asphériques utilisés dans les télescopes.

Les miroirs utilisés dans les télescopes sont souvent utilisés avec un axe optique en position horizontale ou voisine de l'horizontale et il est bien connu que, dans ces conditions, le miroir a tendance à présenter des phénomènes de distorsion sous l'effet de la gravité, phénomène qui est d'autant plus sensible que le miroir est moins rigide et que le miroir a un grand diamètre.

Pour empêcher ce phénomène de distorsion, on utilise différents moyens et notamment des moyens particuliers pour supporter latéralement le miroir en utilisant des contrepoids ou des coussins d'air.

On connaît d'autre par une technique de fabrication de miroir dans laquelle on réalise une structure formée de cloisons délimitant des alvéoles creux répartis en sorte que les centres de gravité de toutes les parties alvéolées soient sensiblement dans un même plan qui contient également le centre de gravité du miroir, cette structure présentant une face frontale sur laquelle on colle une paroi frontale mince réfléchissante et une face dorsale sur laquelle on colle une paroi dorsale mince. L'ensemble ainsi obtenur constitue un miroir que est sensiblement plus léger qu'un miroir plein.

Un tel miroir, du fait qu'il est moins rigide qu'un miroir plein, est encore plus sujet à de déformation et, lorsqu'on cherche à èviter cette déformation au moyen des systèmes à contrepoids ou à coussin d'air, on augmente le poids de l'ensemble, en sorte que l'on perd en partie les avantages dus à la légèrté du miroir.

La présente invention vise à fournir un miroir allégé par des alvéoles et que soit cependant moins sujet à la distortion qu'un miroir plein.

On y parvient, selon la présente invention, avec un miroir tel que défini dans la revendication 1 ou 2.

Par "sensiblement", on veut signifier que le centre de gravité est soit dans ledit plan soit à une distance dudit plan au plus égale à 1/100 de l'épaisseur maximale du miroir.

Ce plan constitue ce que l'on appelle la fibre neutre du miroir et l'on supporte le miroir par des points d'appui latéraux qui sont également dans ce plan.

On décrira ci-après deux modes de réalisation d'u miroir conforme à la présente invention, en référence aux figures du dessin joint sur lequel:

la figure 1 est un coupe par un plan diamétral transversal d'un miroir sphérique plan-concave allégé selon la présente invention;

la figure 2 est une vue de la face dorsale du miroir de la figure 1;

la figure 3 est une vue comme celle de la figure 1 mais dans le cas d'un miroir plan-convexe, et

la figure 4 est une coupe d'un miroir allégé concave-concave symétrique selon la réalisation antérieure.

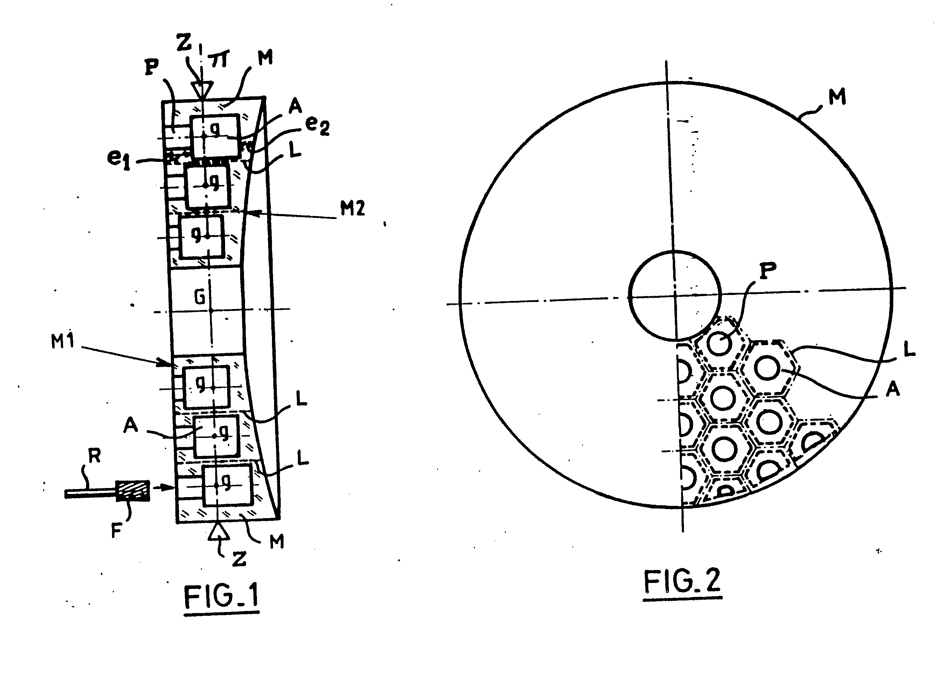

Le miroir de la figure 1 est constitué par une masse de verre ou autre matériau optique M dans laquelle on a réalisé des alvéoles A par usinage à partir de la face dorsale $M_1$ du miroir. Dans cet exemple, cette face dorsale $M_1$ est plane tandis que la face réfléchissante $M_2$ du miroir est concave.

Pour réaliser un avléole, on utilise par exemple une fraise F que l'on enfonce dans le miroir à partir de la face dorsale et que l'on déplace ensuite latéralement jusqu'à obtenir l'avléole désiré.

Avec la même fraise, on réalise ensuite un autre alvéole, etc, ou bien on utilise simultanément différentes fraises. On comprendra qu'il est avantageux d'utiliser une machine de fraisage programmée au moyen d'un ordinateur, le programme étant réalisé en sorte que les centres de gravité g des parties alvéolés soient situés dans une même plan $\pi$.

De préférence, on fait varier en priorité la distance $e_1$ des alvéoles à la face dorsale du miroir pour que les centres de gravité des parties alvéolées soient coplanaires.

Par exemple, dans le cas du miroir plan concave de la figure 1, la distance $e_1$ d'un alvéole à la face dorsale du miroir est croissante par paliers du centre du miroir vers le bord du miroir, tandis, que la distance moyenne $e_2$ d'un alvéole à la face concave réfléchissante $M_2$ du miroir est décroissante par paliers du centre du miroir vers le bord du miroir.

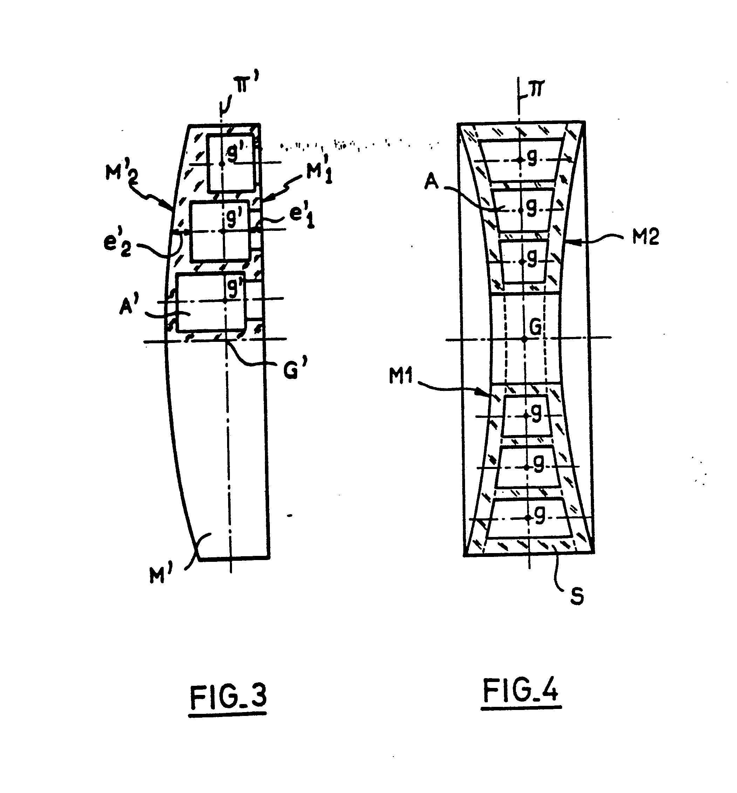

Dans le cas d'un miroir plan convexe (figure 3), c'est l'inverse qui se produit: la distance $e'_1$ d'un alvéole à la face dorsale $M'_1$ du miroir est décroissante par paliers du centre du miroir vers le bord du miroir.

De préférence, les avléoles A ont une répartition en nids d'abeilles, comme on le voit par exemple sur la figure 2. On voit, sur cette figure, les trous de perçage P de la face dorsale du miroir et, derrière ces trous, on a représenté en traits pointillés les parois hexagonales des avléoles et, en traits mixtes L, des plans fictifs qui passent entre les parois des alvéoles à égale distance des parois et qui déterminent les frontières des portions avléolées.

La figure 3 est analogue à celle de la figure 1 mais dans le cas d'un miroir plan concave et l'on a utilisé les mêmes références que sur la figure 1, mais affectés d'un indice'.

La figure 4 montre à titre comparatif un miroir allégé constitué par une structure interne en nids d'abeilles S sur laquelle on a fixé une paroi frontale concave réfléchissante $M_2$ et une paroi concave dorsale $M_1$. Pour des raisons pratiques, les parois rapportées frontale et dorsale ont nécessairement une épaisseur constante si bien que les centres de gravité des portions alvéolées ne peuvent être coplanaires que dans le cas représenté où la structure interne admet un plan de symétrie et où les parois frontale et dorsale sont symétriques par rapport à ce plan. Un tel miroir équiconcave (ou équi-convexe) comporte nécessairement plus de matière qu'un miroir plan-convexe (ou plan-convexe-plan), outre le fait qu'il est plus difficile de polir le miroir lorsque sa face dorsale (qui est la face d'appui pendant le polissage) n'est pas plane.

L'invention n'est pas limitée à une forme ou à une dimension particulière d'alvéole.

Le miroir est normalement supporté par un dispositif d'appui en soi connu dont les points d'appui sur le miroir sont des points d'appui latéraux situés dans le plan des centres de gravité π (π'). On a schématiquement représenté ces appuis latéraux en Z sur la figure 1.

## Revendications

1. Miroir à face réfléchissante (M₂) non plane comportant

—un corps (M) ayant deux faces opposées dont l'une constitue la face réfléchissante (M₂) et dont l'autre constitue la face dorsale (M₁) du miroir, ledit corps comportant un pluralité de portions alvéolées (A), dont chacune s'étend entre les deux faces opposées et qui sont reparties dans le corps en deux dimensions, chaque portion comprenant un alvéole (A) disposé en sorte que les centres de gravité (g) des portions alvéolées soient sensiblement dans un même plan (π) intermédiaire du corps, lequel plan (π) contient aussi le centre de gravité du miroir (G), des appuis latéraux (Z, Z) dans ledit plan (π) intermédiaire, pour un dispositif de support, charactérisé en ce que

—le corps (M) est constitué par une masse intégrale d'un matériau optique,

—la face réfléchissante (M₂) du miroir est concave et la face dorsale (M₁) est plane,

—la distance (e₁) entre la face dorsale (M₁) et la face d'extrémité de chaque alvéole en regard de la face dorsale est croissante par paliers du centre du miroir vers le bord du miroir.

2. Miroir à face réfléchissante (M₂') non plane comportant

—un corps (M') ayant deux faces opposées dont l'une constitue la face réfléchissante (M₂') et dont l'autre constitue la face dorsale (M₁') du miroir, ledit corps comportant une pluralité de portions alvéolées (A') dont chacune s'étend entre les deux faces opposées et qui sont reparties dans le corps en deux dimensions, chaque portion comprenant un alvéole (A') disposé en sorte que les centres de gravité (g') des portions alvéolées soient sensiblement dans un même plan (π') intermédiaire du corps, lequel plan (π') contient aussi le centre de gravité du miroir (G'),

—des appuis latéraux dans ledit plan (π') intermédiaire pour un dispositif de support, caractérisé en ce que

—le corps (M') est constitué par une masse intégrale d'un matériau optique,

—la face réfléchissante (M₂') du miroir est convexe et la face dorsale (M₁') est plane,

—la distance (e₁') entre la face dorsale (M₁') et la face d'extrémité de chaque alvéole en regard de la face dorsale est décroissante par paliers du centre du miroir vers le bord du miroir.

3. Miroir selon la revendication 1 ou 2, caractérisé en ce que lesdits alvéoles (A) ont une disposition en nids d'abeilles.

4. Miroir selon l'une des revendications 1 à 3, caractérisé en ce que le diamètre du miroir est supérieur à 0,50 m, de préférence dans la gamme 2—3 m.

5. Utilisation d'un miroir selon l'une des revendications précédentes, dans un télescope.

## Patentansprüche

1. Speigel mit nicht-planar, reflektierender Oberfläche (M₂), mit

—einem zwei gegenüberliegende Flächen aufweisenden Körper (M), wobei die eine die reflektierende Fläche (M₂) bildet und die andere die Rückenfläche (M₁) des Spiegels bildet, wobei der Körper eine Vielzahl von zellenartigen Bereichen (A) umfaßt, von denen sich jeder zwischen den zwei sich gegenüberliegenden Flächen erstreckt und die im Körper in zwei Dimensionen verteilt sind, wobei jeder Bereich eine Zelle (A) aufweist, die so angeordnet ist, daß die Schwerpunkte (g) der zellenartigen Bereiche genau in der Zwischenebene (π) des Körpers liegen, wobei die Ebene (π) auch den Schwerpunkt des Spiegels (G) enthält,

—Querstüzten (Z, Z) in der Zwischenebene (π) für eine Trägervorrichtung, dadurch gekennzeichnet, daß

—der Körper (M) aus einer einstückigen Masse eines optischen Materials gebildet ist,

—die reflektierende Fläche (M₂) des Spiegels konkav ist und die Rückenfläche (M₁) plan ist,

der Abstand (e₁) zwischen der Rückenfläche (M₁) und der Außenfläche jeder Zelle in bezug auf die Rückenfläche durch Stufen vom Mittelpunkt des Spiegels zum Rand des Spiegels hin anwachsend ist.

2. Spielgel mit nicht-planar, reflektierender Oberfläche (M₂'), mit

—einem zwei gegenüberliegende Flächen aufweisenden Körper (M'), wobei die eine die reflektierende Fläche (M₂') bildet und die andere die Rückenfläche (M₁) des Speigels bildet, wobei der Körper eine Vielzahl von zellenartigen Bereichen (A') umfaßt, von denen sich jeder zwischen den zwei gegenüberliegenden Flächen erstreckt und die im Körper in zwei Dimensionen verteilt sind, wobei jeder Bereich eine Zelle (A') aufweist, die so angeordnet ist, daß die Schwerpunkte (g') der zellenartigen Bereiche genau in derselben Zwischenebene (π') des Körpers liegen, wobei die Ebene (π') auch den Schwerpunkt des Spiegels (G') enthält,

—Querstützen in der Zwischenebene (π') für eine Trägervorrichtung, dadurch gekennzeichnet, daß

—der Körper (M') aus einer einstückigen Masse eines optischen Materials gebildet ist,

—die reflektierende Fläche ($M_2'$) des Spiegels konvex ist und die Rückenfläche ($M_1'$) plan ist,

—der Abstand ($e_1'$) zwischen der Rückenfläche ($M_1'$) und der Außenfläche jeder Zelle in bezug auf die Rückenfläche durch Stufen vom Mittelpunkt des Spiegels zum Rand des Spiegels hin abnehmend ist.

3. Spiegel nach Anspruch 1 oder 2, dadurch gekennzeichnet, daß die Hohlräume (A) bienenwabenartige angeordnet sind.

4. Spiegel nach einem der Ansprüche 1 bis 3, dadurch gekennzeichnet, daß der Durchmesser des Spiegels größer als 0,50 m ist, vorzugsweise im Bereich von 2—3 m.

5. Verwendung eines Spiegels nach einem der vorangehenden Ansprüche in einem Teleskop.

**Claims**

1. Mirror with a non-plane reflective face ($M_2$) having

—a body (M) having two opposing faces of which one constitutes the reflective face ($M_2$) and the other constitutes the dorsal face ($M_1$), the said body having a plurality of alveolate portions (A), each of the said portions extending between the two opposing faces and being distributed in the body in two dimensions, each portion comprising one alveolus (A) arranged in such a way that the centres of gravity (g) of the alveolate portions are substantially in one and the same intermediate plane ($\pi$) of the body, the said plane ($\pi$) also containing the centre of gravity of the mirror (G).

—lateral supports (Z, Z) in the said intermediate plane ($\pi$) for a supporting device, characterised in that

—the body (M) is formed by an integral mass of an optical material,

—the reflective face ($M_2$) of the mirror is concave and the dorsal face ($M_1$) is plane,

—the distance ($e_1$) between the dorsal face ($M_1$)

and the end face of each alveolus facing the dorsal face is increasing by means of bearings from the centre of the mirror towards the edge of the mirror.

2. Mirror with a non-plane reflective face ($M_2'$) having

—a body (M') having two opposing faces of which one constitutes the reflective face ($M_2'$) and the other constitutes the dorsal face ($M_1'$), the said body having a plurality of alveolate portions (A'), each of the said portions extending between the two opposing faces and being distributed in the body in two dimensions, each portion comprising one alveolus (A') arranged in such a way that the centres of gravity (g') of the alveolate portions are substantially in one and the same intermediate plane ($\pi'$) of the body, the said plane ($\pi'$) also containing the centre of gravity of the mirror (G').

—lateral supports in the said intermediate plane ($\pi'$) for a supporting device, characterised in that

—the body (M') is formed by an integral mass of an optical material,

—the reflective face ($M_2'$) of the mirror is convex and the dorsal face ($M_1'$) is plane,

—the disance ($e_1'$) between the dorsal face ($M_1'$) and the end face of each alveolus facing the dorsal face is decreasing by means of bearings from the centre of the mirror towards the edge of the mirror.

3. Mirror as claimed in Claims 1 or 2, characterised in that the said alveoli (A) are arranged as honeycombs.

4. Mirror as claimed in one Claims 1 to 3, characterised in that the diameter of the mirror is greater than 0.50 m, preferably within the range 2—3 m.

5. Use of a mirror according to one of the preceding claims in a telescope.

FIG.1

FIG.2

EP 0 227 502 B1

FIG.3

FIG.4